# EUROPEAN PATENT SPECIFICATION

(11) **EP 1 517 864 B1**
(45) Date of publication and mention of the grant of the patent: **02.03.2011**
(21) Application number: 03761852.7
(22) Date of filing: 26.06.2003
(51) Int. Cl.: C03B 37/018

(54) **METHOD FOR FABRICATING OPTICAL FIBER PREFORM WITHOUT HYDROXYL GROUP IN CORE**
VERFAHREN ZUR HERSTELLUNG EINER LICHTLEITFASERVORFORM MIT HYDROXYLGRUPPEN IM KERN
PROCEDE DE FABRICATION D'UNE PREFORME DE FIBRE OPTIQUE EXEMPTE DE GROUPES HYDROXY DANS L'AME

(30) Priority: 29.06.2002 KR 2002037360
(43) Date of publication of application: 30.03.2005
(73) Proprietor: LS Cable Ltd., Dong-an-gu Anyang City Gyeonggi-do (KR)
(72) Inventor: LEE, Chan-Joo, 121-867 Seoul (KR); PARK, Lae-Hyuk, 150-778 Seoul (KR); KIM, Jae-Sun, 143-201 Seoul (KR); SON, Soon-Il, 423-803 Gyeonggi-do (KR)
(74) Representative: Grünberg, Thomas
(86) International application number: PCT/KR2003/001251
(87) International publication number: WO 2004/002910

(56) References cited:
- WO-A-01/20370
- JP-A- 55 158 144
- JP-A- 56 014 440
- JP-A- 60 145 924
- JP-A- 63 315 530
- KR-A- 960 014 984
- US-A- 5 397 372

## Description

### TECHNICAL FIELD

The present invention relates to a method for fabricating an optical fiber preform substantially without a hydroxyl group (OH) in a core layer by using a Modified Chemical Vapor Deposition (MCVD).

### BACKGROUND ART

The Modified Chemical Vapor Deposition (MCVD) is one of optical fiber manufacturing methods. In the MCVD, a clad layer is firstly formed, and then a core layer is formed inside the clad layer.

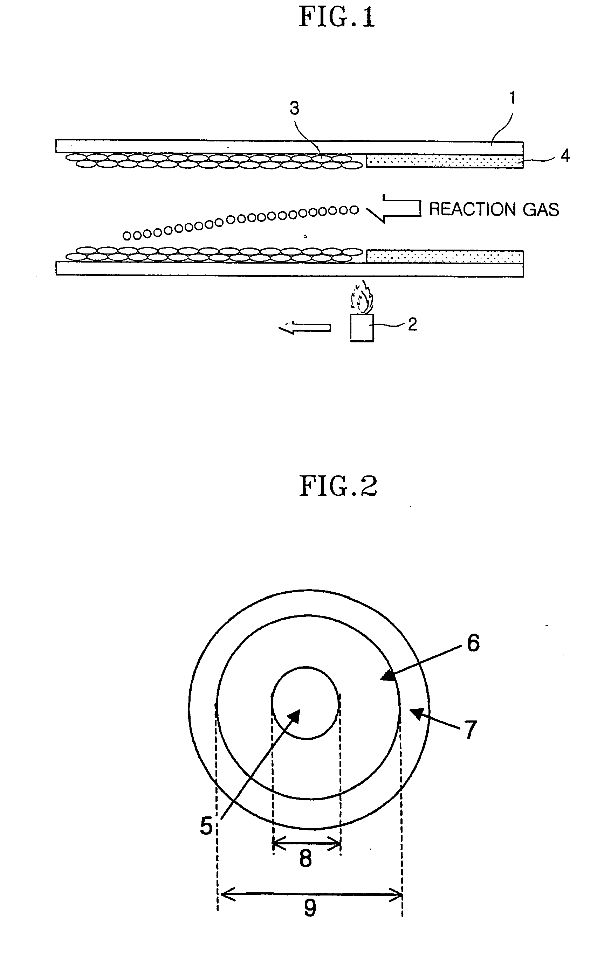

To describe the conventional MCVD in more detail with reference to FIG. 1, a quartz tube 1 is put on lathe, and then reaction gases for forming soot such as SiCl₄, GeCl₄ and POCl₃ are flowed into the quartz tube 1 together with oxygen gas while rotating the quartz tube 1. At the same time, a torch 2 providing a temperature more than 1600°C is reciprocated out of the tube 1 along the axial direction of the tube 1 so that the reaction gases flowed into the tube 1 are sufficiently reacted.

Whenever the torch 2 reciprocates once, the oxidization reaction of halide gas as expressed in the following Reaction Formula 1 is induced at an area in the tube 1 which reaches a reaction temperature, thereby generating fine glass particles (hereinafter, referred to as 'soot') 3. During the movement of the torch 2, the soot 3 is deposited on an inner surface of the tube 1 at an area which has a relatively lower temperature than an area heated by the torch 2, by means of the thermophoresis.

Reaction Formula 1 SiCl₄ + O₂ → SiO₂ + 2Cl₂ GeCl₄ + O₂ → GeO₂ + 2Cl₂

The layer of soot 3 deposited on the inner surface of the tube 1 is sintered by the heat of the torch 2 adjacently followed and becomes a transparent glass layer. This process is continuously repeated so that there are deposited a plurality of the clad layers on the inner side of the tube 1 and subsequently a plurality of core layers on the clad layer. FIG. 2 shows a section of the optical fiber preform manufactured by the above-mentioned process. In FIG. 2, reference numeral 5 denotes a core, 6 denotes a clad, 7 denotes a tube, 8 denotes a diameter of the core, and 9 denotes a diameter of the clad.

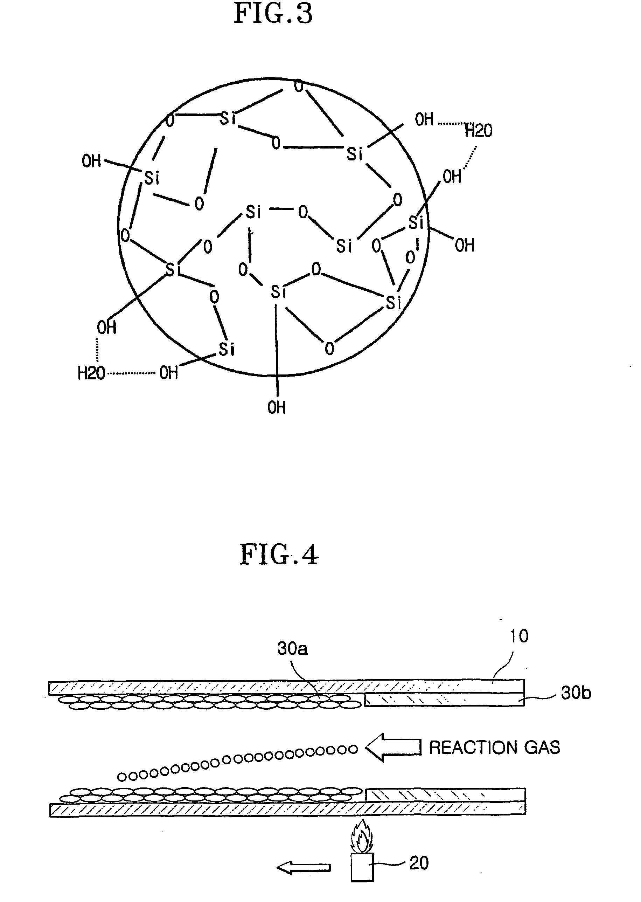

However, in the conventional MCVD, while a plurality of clad layers and core layers are formed, there occurs a problem that hydroxyl groups (OH) are included therein as impurities. In fact, the reaction gases flowed into the tube 1 generally contain a small amount of moisture, and this moisture is absorbed on the surface of the deposition layer formed inside the tube 1 and then dispersed into the deposition layer under the high temperature, thereby generating bond of Si and OH. FIG. 3 shows an interatomic bond structure after the soot deposition layer is sintered in the optical fiber preform fabricating process using MCVD. Referring to FIG. 3, it may be found that a large amount of hydroxyl groups (OH) and Si is bonded therein.

However, since the depositing and sintering of the soot 3 is achieved through successive procedures by using the torch 2 in the MCVD according to the prior art, the removal of the hydroxyl group (OH) included in the clad layer or the core layer as impurities is nearly impossible if any separate dehydration is not conducted. It is because the hydroxyl group (OH) included as impurities in the soot 3 through chemical reaction is stably bonded to Si and stays therein though the MCVD process is conducted at high temperature.

On the other hand, the optical loss, which is most essential for the optical fiber, is composed of the Rayleigh scattering loss caused by the difference of density and constitution of the optical fiber preform, the ultraviolet absorption loss according to electronic transition energy absorption in atom level, the infrared absorption loss according to energy absorption during lattice vibration, the hydroxyl group absorption loss due to vibration of hydroxyl group (OH), and the macroscopic bending loss.

The optical loss should be low in order to ensure reliable signal transmission through the optical fiber. The optical fiber generally has an optical loss lower than a predetermined level in the wavelength range between 1280nm and 1620nm, and currently two wavelengths 1310nm and 1550nm are used as main wavelength ranges for optical communication. In addition, the optical loss due to the hydroxyl group (OH) absorption is particularly considered significant in the wavelength 1385nm more than in other wavelengths, and this wavelength is at present not used due to the high optical loss caused by the hydroxyl group (OH) absorption. Thus, in order to use all of the wavelength range 1310nm ∼ 1550nm, the average optical loss in the wavelength 1385nm due to the hydroxyl group (OH) in the optical fiber should be lower than a value at 1310nm (average 0.34dB/Km). Since the core composed of germanium dioxide and silicon dioxide has a Rayleigh loss of about 0.28dB/Km caused by the density and constitution difference of its material itself, the optical fiber can be used in the wavelength 1310nm ∼ 1550nm only when the optical loss caused by the hydroxyl group (OH) is controlled lower than at least 0.06dB/Km. For this reason, the fabrication of the optical fiber preform should be also controlled so that the concentration of hydroxyl group (OH) in the optical fiber is not more than 1ppb. However, the concentration of hydroxyl group comes up to 30ppm when only two hydroxyl groups exist on the surface of particle having a diameter of 1µm, and this concentration may be converted into an optical loss of even 0.75dB/Km. This fact shows that the MCVD according to the prior art may hardly control the concentration of hydroxyl group (OH) contained in the optical fiber preform as impurities in the level of not more than 1ppb.

It is known that an OH-free single mode optical fiber may be fabricated by using OVD (Outside Vapor Deposition) as disclosed in U.S. Pat. No. 3,737,292, U.S. Pat. No. 3,823,995 and U.S. Pat. No. 3,884,550, and using VAD (Vapor Axial Deposition) as disclosed in U.S. Pat. No. 4,737,179 and U.S. Pat. No. 6,131,415.

However, different to OVD and VAD, the conventional MCVD executes the deposition process and the sintering process at the same time so that the soot is formed and at the nearly same time melted and condensed. Thus, in the optical fiber preform fabricated by the conventional MCVD, Si-OH is included in the glass layer condensed due to the sintering causes critical hydroxyl group (OH) absorption loss at the wavelength 1385nm. Accordingly, the optical fiber drawn from the preform fabricated by the conventional MCVD has a limitation in the usable optical communication wavelength range

Japanese Laid-open Patent Showa 63-315530 discloses a method for making an optical fiber preform, which includes the steps of forming a porous accumulation layer by accumulating metal oxide particles; dehydrating the porous accumulation layer by flowing a dehydrating agent into a quartz tube having the porous accumulation layer; sintering the porous accumulation layer to be transparent while flowing the dehydrating agent into the quartz tube; and condensing the quartz tube with the dehydrating agent being filled in the quartz tube.

This patent is however difficult to completely remove all hydroxyl groups (OH) existing in the deposition layer if the deposition layer (particularly, the core layer) is thick since the dehydration is conducted after the clad layer and the core layer are all accumulated in the quartz tube.

In other words, the technique suggested by Japanese Laid-open Patent Showa 63-315530 is not suitable for making an optical communication system at present (particularly, CWDM) in which the optical fiber preform is large-sized and the minimum absorption loss is required at 1385nm.

From document JP 55158144, a method for deposition of a glass fine particle layer on the inside of a quartz tube is known, wherein a starting material gas is introduced into the quartz tube which is rotated. Simultaneously, a dehydrating agent is introduced into the quartz tube. The quartz tube is heated by a burner, whereby the starting material gas is oxidised and clad is deposited on the inside of the tube. By raising the temperature with the burner, the clad is vitrified.

From document WO 01/20370 A2, a method of creating a codoped layer is known which includes creating a first layer and a second layer on the inside of a tube is known.

### DISCLOSURE OF INVENTION

In order to solve the problem that the removing efficiency of hydroxyl groups (OH) existing in the core layer is low since the dehydration is not sufficiently progressed deep into the deposition layer in which a thick clad or core layer is deposited, which occurs when fabricating an optical fiber preform by use of MCVD according to the method disclosed in Japanese Laid-open Patent Showa 63-315530, the inventors found out that the hydroxyl groups (OH) in the core layer may be substantially completely removed by means of depositing at least one core layer on the inside of the quartz tube and then independently conducting the dehydration process whenever each core layer is deposited.

Thus, in the method for fabricating an optical fiber preform using MCVD, the present invention is directed to an object to provide an optical fiber preform fabricating method which may substantially remove all hydroxyl groups (OH) existing in the core layer regardless of the thickness of the deposition layer in the quartz tube.

In addition, another object of the invention is to provide a method for fabricating an optical fiber, which may be used for optical communication in the entire wavelength range of 1310nm ∼ 1550nm, by use of the OH-free optical fiber preform.

In this aspect, the present invention is substantially related to a method for fabricating an optical fiber preform in which hydroxyl groups (OH) are removed from the core layer.

In more detail, the present invention provides a method for fabricating an optical fiber preform substantially without hydroxyl group (OH) in a core layer by use of MCVD (Modified Chemical Vapor Deposition), which includes the steps of: (1) forming a clad layer with a relatively low refractive index by depositing soot containing SiO₂ and GeO₂ on an inner surface of a quartz tube; and (2) forming a core layer with a relative high refractive index on the clad layer, wherein the core layer forming step includes: (a) a base core layer forming step having an accumulation process for generating soot by heating the quartz tube so that a temperature in the quartz tube becomes 1000°C ∼ 1400°C while introducing a reaction gas for forming soot together with a carrier gas, and then accumulating the soot on the clad layer, a dehydration process for removing hydroxyl group (OH) and moisture contained in the soot and the tube by heating the quartz tube so that a temperature in the quartz tube becomes 600°C - 1200°C while introducing a dehydration gas into the quartz tube, and a sintering process for sintering and vitrifying the soot by heating the quartz tube to which the soot is deposited so that a temperature in the quartz tube becomes over 1700°C; and (b) an additional core layer forming step for additionally forming at least one core layer on the base core layer by repeating the accumulation, dehydration and sintering processes of the step (a) at least one time.

### BRIEF DESCRIPTION OF THE DRAWINGS

These and other features, aspects, and advantages of preferred embodiments of the present invention will be more fully described in the following detailed description, taken accompanying drawings. In the drawings:
FIG. 1 is for illustrating a method for fabricating an optical fiber preform using MCVD according to the prior art;
FIG. 2 is a sectional view showing an optical fiber preform fabricated by the method of FIG. 1;
FIG. 3 shows that moisture is absorbed into the soot deposited by the method of FIG. 1;
FIG. 4 is for illustrating the clad layer forming process according to a preferred embodiment of the present invention;
FIGs. 5a to 5f are for illustrating the core layer forming process according to a preferred embodiment of the present invention;
FIG. 6 is a sectional view showing a hollow preform in which a clad layer and a core layer are deposited on the inside of a quartz tube according to a preferred embodiment of the present invention; and
FIG. 7 is a graph showing the absorption loss of the optical fiber core layer according to the wavelength for comparing the present invention with the prior art.

### BEST MODES FOR CARRYING OUT THE INVENTION

Hereinafter, preferred embodiments of the present invention will be described in detail with reference to the accompanying drawings.

A method for fabricating an optical fiber preform according to the present invention is composed of a clad layer forming step and a core layer forming step.

The clad layer forming step is also composed of a deposition step of the clad layer and a sintering step of the clad layer. In addition, the core layer forming step is also composed of a base core layer accumulation step, a base core layer dehydration step, a base core layer sintering step and a step of additionally forming at least one core layer on the base core layer.

Now, the method for fabricating an optical fiber preform according to the present invention is described in detail with reference to FIGs. 4 to 6.

### 1. Step of forming Clad Layer

At first, FIG. 4 is showing a soot deposition process.

While a quartz tube 10 having a concentration of hydroxyl group (OH) less than 500ppb is rotated, gases in which reaction gases for forming soot such as SiCl₄, GeCl₄ and POCl₃ are mixed with oxygen gas are blown into the tube. While blowing the mixed gases into the tube, the tube is heated by use of a heat source 20 so that a temperature in the tube becomes over 1700°C.

The reaction gases introduced in an arrowed direction of FIG. 4 are oxidized due to the heat conducted from the surface of the quartz tube 10 to generate soot 30a. The soot 30a is moved in the tube toward an area having a relatively lower temperature and then accumulated on the inner surface of the tube by means of thermophoresis.

At least one layer of clad soot particle 30a is accumulated on the inner surface of the quartz tube 10. In addition, as shown in FIG. 4, the heat source 20 is moved to the arrowed direction of FIG. 4, and the soot 30a accumulated on the inner surface of the tube is thereby sintered and vitrified after the accumulation process in order to form a sintered layer 30b.

The above-mentioned accumulation and sintering processes form one clad layer, and these processes are repeated until the clad layer obtains a desired thickness.

At this time, the quartz tube 10 preferably rotates at a rotation speed of 20rpm ∼ 100rpm. If the rotation speed of the quartz tube 10 is not more than 20rpm, the soot is not accumulated in a uniform thickness. In addition, if the rotation speed of the quartz tube 10 is not less than 100rpm, the accumulation speed of soot is lowered.

The heat source 20 also preferably moves at a velocity less than 500mm/min along the longitudinal direction of the quartz tube 10 (see an arrow of the heat source 20 in FIG. 4). If the velocity of the heat source 20 is over 500mm/min, the particles deposited on the inner surface of the tube are not uniformly sintered to cause distortion of the deposited surface.

### 2. Step of forming Core Layer

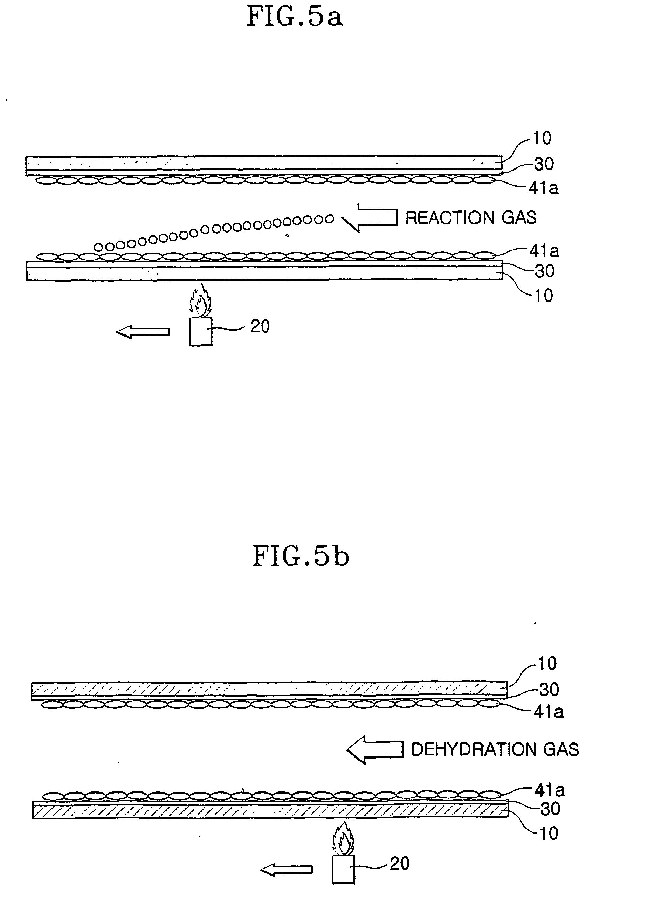

Now, the step of forming a core layer according to the present invention is described in detail with reference to FIGs. 5a to 5f.

### (1) Forming a Base Core Layer

While blowing the mixed gases in which reaction gases for forming soot such as SiCl₄ and GeCl₄ are mixed with oxygen gas into the quartz tube 10 on which the clad layer 30 is formed, the tube is heated by use of the heat source 20 so that a temperature in the tube becomes in a range of 1000°C ∼ 1400°C.

At this time, the heat source 20 preferably moves at a velocity less than 500mm/min along the longitudinal direction of the quartz tube 10 (see an arrow of the heat source 20 in FIG. 5a). If the velocity of the heat source 20 is over 500mm/min, the oxygen gas and the reaction gas introduced into the tube may be not sufficiently reacted, thereby insufficiently generating SiO₂ and GeO₂ to form a deposition layer.

The reaction gas introduced in the arrowed direction of FIG. 5a is oxidized by means of the heat conducted from the surface of the quartz tube 10 to generate soot 41 a. This soot 41a then moves to an area having a relatively lower temperature in the tube and is then accumulated on the clad layer 30 by means of the thermophoresis.

At this time, the quartz tube 10 preferably rotates at a rotation speed of 20rpm ∼ 100rpm. If the rotation speed of the quartz tube 10 is not more than 20rpm, the soot is not accumulated in a uniform thickness. In addition, if the rotation speed of the quartz tube 10 is not less than 100rpm, the accumulation speed of soot is lowered.

After forming a base core layer 41 of the soot 41 a on the inner surface of the quartz tube 10, the dehydration process is proceeded as shown in FIG. 5b.

While dehydration gases including helium (He), chlorine (Cl₂) and oxygen (O₂) is blown into the quartz tube 10 in which the soot 41 a is accumulated, the heat source 20 heats the tube 10 with moving along the direction to which the dehydration gases is blown.

At this time, a temperature in the quartz tube 10 is preferably kept to 600°C - 1200°C. If the temperature in the tube 10 becomes over 1200°C, the soot forms a neck with the number of soot particles decreasing due to the aggregation of the soot particles. As a result, the diameter of the soot particle is increased and the pores existing among the soot particles, which are dispersion route of the hydroxyl groups (OH), are disappeared more rapidly than the case that the temperature in the quartz tube 10 is kept to 600°C ∼ 1200°C. In other words, since the soot is grown at a rate faster than the rate that the hydroxyl groups (OH) existing in the pores are dispersed, the hydroxyl groups (OH) are not dispersed out of the soot 41a but captured therein.

Thus, in order to efficiently evaporate the hydroxyl groups (OH) and moisture included in the soot 41a, the clad layer 30 or the quartz tube 10 and also prevent the hydroxyl groups (OH) from being captured therein, the temperature for the dehydration is preferably kept between 600°C - 1200°C.

In addition, the heat source 20 preferably moves at a velocity less than 500mm/min along the longitudinal direction of the quartz tube 10 (see an arrow of the heat source 20 in FIG. 5b). If the velocity of the heat source 20 is over 500mm/min, the dehydration gas introduced into the tube may be not sufficiently reacted with the moisture or the hydroxyl groups (OH), thereby not capable of sufficiently removing the moisture or the hydroxyl groups (OH) existing in the soot accumulation layer 41a or the tube 10.

The mechanism by which the dehydration gas is reacted with the moisture or the hydroxyl groups (OH) existing in the soot accumulation layer 41a or the tube 10 for the dehydration reaction may be expressed in the following Reaction Formula 2.

Reaction Formula 2 4Si-OH + 2Cl₂ ⇔ 2Si-O-Si + 4HCl + O₂ Si-OH-Cl₂ ⇔ Si-O-Si + HCl 2H₂O + Cl₂ ⇔ 2HCl + O₂

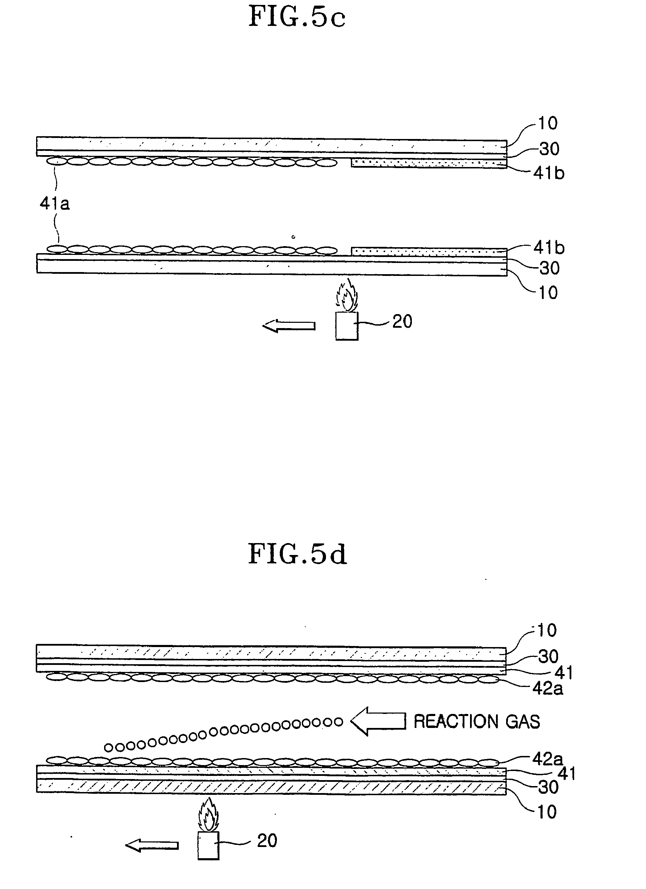

After the dehydration process, the quartz tube 10 passes through the sintering processes as shown in FIG. 5c to become a hollow preform in which the clad layer 30 and the base core layer 41 are formed.

In other words, after the dehydration process, while the temperature in the tube 10 is kept over 1700°C by the heat source 20, which is moved in the direction indicated by an arrow of FIG. 5c, the soot 41a accumulated on the clad layer 30 is sintered and vitrified to form a sintered layer 41b.

At this time, the heat source 20 preferably moves at a velocity less than 500mm/min along the longitudinal direction of the quartz tube 10 (see an arrow of the heat source 20 in FIG. 5c). If the velocity of the heat source 20 is over 500mm/min, the particles accumulated on the inner surface of the tube are not uniformly sintered, thereby generating distortion on the deposited surface.

In addition, it is also possible to additionally eliminate residual moisture or hydroxyl group (OH) which is not reacted by introducing dehydration gases including helium (He), chlorine (Cl₂) and oxygen (O₂) into the tube when executing the sintering process of FIG. 5c.

### (2) Forming an Additional Core Layer

After the base core layer 41 is formed on the inner surface of the quartz tube 10 by subsequently executing the processes shown in FIGs. 5a to 5c, at least one additional core layer 42 may be formed on the base core layer 41 by executing the processes shown in FIGs. 5d to 5f repeatedly.

Though only one additional core layer 42 may be formed on the base core layer 41, it is more preferable that at least two additional core layers 42 are formed on the base core layer 41.

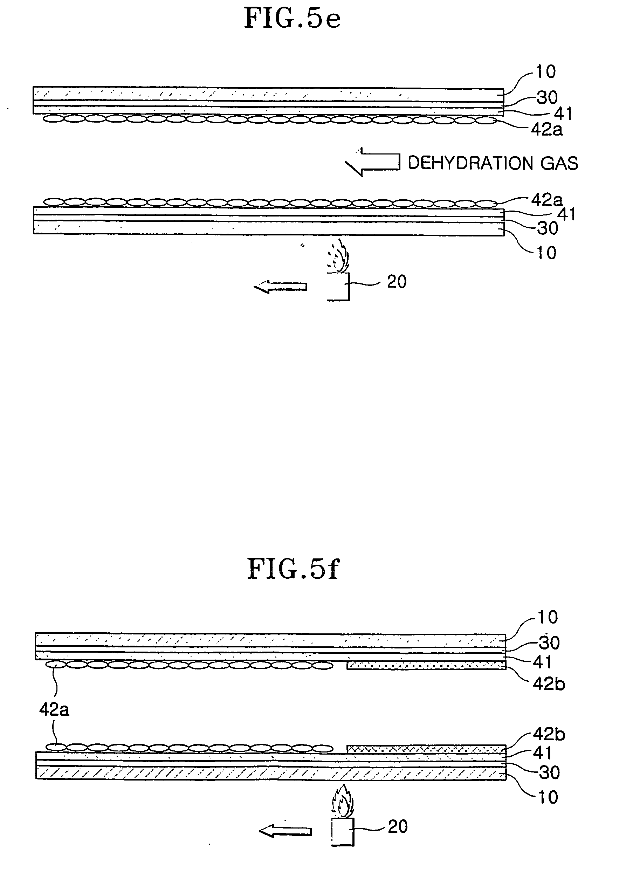

This additional core layer is also formed by repeatedly executing the accumulation process (see FIG. 5d), the dehydration process (see FIG. 5e) and the sintering process (see FIG. 5f), similar to the procedure for forming the base core layer 41.

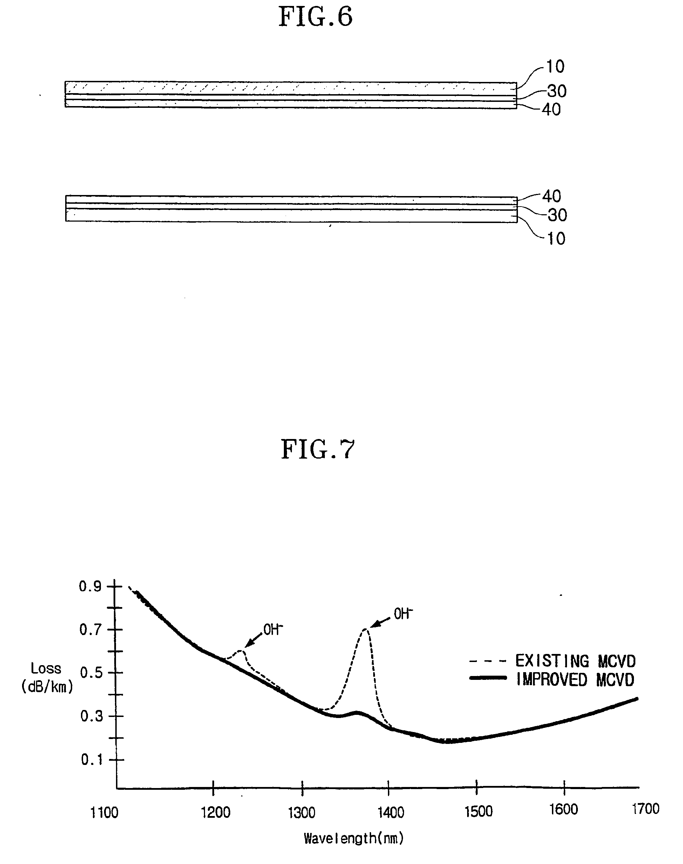

The hollow preform in which the clad layer 30 and the core layer 40 are deposited on the inner surface of the quartz tube 10 as described in FIG. 6 may be made by executing the clad layer forming step, and the core layer forming step in which the accumulation process, the dehydration process and the sintering process are repeated several times.

The hollow preform is then made into an optical fiber preform rod by means of the well-known collapsing step.

The clad layer forming step, the core layer forming step and the collapsing step are successively performed with the use of the same equipment and the same heat source.

In the present invention, the heat source 20 used in the clad layer forming step, the core layer forming step and the collapsing step may be modified variously. For example, various heating means such as an oxygen-hydrogen burner, a plasma torch and an electric resistance furnace may be adopted as the heating source 20.

Since the hydroxyl group (OH) included in the tube and the hydroxyl group (OH) penetrated into the tube due to the oxygen/hydrogen burner may be dispersed into the core layer, it is preferred to deposit the clad layer thick in the clad layer deposition processes in order to prevent the hydroxyl group (OH) from invading into the core layer. For example, an outer diameter ratio of the clad layer and the core layer is preferably over 2.0 after the collapsing step, and a final diameter ratio of the clad layer and the core layer of the optical fiber preform is preferably over 3.0.

At this time, the core layer preferably has a thickness not less than 6.0mm, the clad layer preferably has a thickness not less than 12.0mm, and the optical fiber preform preferably has a thickness not less than 20.0mm.

Also, an optical fiber may be drawn from the optical fiber preform made according to the present invention by means of a common drawing process.

FIG. 7 shows the optical loss of the optical fiber fabricated by the method of the present invention.

FIG. 7 shows the optical loss generated in the optical fiber core in the range of 1100nm ∼ 1700nm, in which a dotted line shows the optical loss of a conventional optical fiber, and a solid line shows the optical loss of an optical fiber fabricated according to the present invention.

As well known from FIG. 7, in case of the optical fiber made by the method of the present invention, the optical loss caused by hydroxyl group (OH) is dramatically decreased at the wavelength 1385nm less than 0.33dB/Km, and the optical losses caused by scattering at the wavelengths 1310nm and 1550nm are also decreased respectively less than 0.34dB/Km and 0.20dB/Km, compared with the conventional single-mode optical fiber.

### INDUSTRIAL APPLICABILITY

The optical fiber preform fabricated according to the method of the present invention has a hydrogen ion concentration less than 1ppb therein.

Thus, the optical fiber made by using the preform may have an optical loss less than 0.33dB/Km at the wavelength range of 1340nm - 1460nm, which is lower than the optical loss at the wavelength 1310nm generally used in the optical transmission system.

## Claims

1. A method for fabricating an optical fiber preform substantially without hydroxyl group (OR) in a core layer by use of MCVD (Modified Chemical Vapor Deposition), the method comprising the steps of:
(1) forming a clad layer (30) with a relatively low refractive index by depositing soot (30a) containing SiO₂ and GeO₂ on an inner surface of a quartz tube (10); and
(2) forming a core layer with a relative high refractive index on the clad layer (30),
wherein the core layer forming step includes:
(a) a base core layer forming step having an accumulation process for generating soot (41a) by heating the quartz tube (10) so that a temperature in the quartz tube (10) becomes 1000°C ∼ 1400°C while introducing a reaction gas for forming soot (41a) together with a carrier gas, and then accumulating the soot (4 1 a) on the clad layer (30), a dehydration process for removing hydroxyl group (OH) and moisture contained in the soot (41 a) and the tube by heating the quartz tube (10) so that a temperature in the quartz tube (10) becomes 600°C - 1200°C while introducing a dehydration gas into the quartz tube (10), and a sintering process for sintering and vitrifying the soot (41a) by heating the quartz tube (10) to which the soot is deposited so that a temperature in the quartz tube (10) becomes over 1700°C;and
(b) an additional core layer forming step for additionally forming at least one core layer (42) on the base core layer (41) by repeating the accumulation, dehydration and sintering processes of the step (a) at least one time.

2. A method for fabricating an optical fiber preform according to claim 1,
wherein the reaction gas includes SiCl₄. and GeCl₄.

3. A method for fabricating an optical fiber preform according to claim 1,
wherein the accumulation, dehydration and sintering processes are executed successively while the quartz tube (10) is exposed to a moving heat source (20).

4. A method for fabricating an optical fiber preform according to claim 3,
wherein the heat source (20) is selected from the group consisting of an oxygen-hydrogen burner, a plasma torch and an electric resistance furnace.

5. A method for fabricating an optical fiber preform according to claim 4,
wherein the heat source (20) moves at a velocity less than 500 mm/min.

6. A method for fabricating an optical fiber preform according to claim 1, wherein the dehydration gas is introduced into the quartz tube (10) during the sintering process in order to additionally remove residual moisture and hydroxyl group (OH).

7. A method for fabricating an optical fiber preform according to claim 1,
wherein the dehydration gas includes at least one selected from the group consisting of helium (He), chlorine (Cl₂) and oxygen (O₂).

8. A method for fabricating an optical fiber preform according to claim 1,
wherein the carrier gas is oxygen.

9. A method for fabricating an optical fiber preform according to claim 1,
wherein the quartz tube (10) rotates at a rotation speed of 20 - 100 rpm while the soot (30a, 41a) is accumulated.

10. A method for fabricating an optical fiber preform according to claim 1,
wherein there is formed more than one clad layer (30) on the inner surface of the quartz tube (10).

11. A method for making a single-mode optical fiber comprising the steps of:
forming a preform rod by condensing the optical fiber preform fabricated according to the method defined in claim 1, and then drawing the preform rod to make an optical fiber.

## Patentansprüche

1. Verfahren zur Herstellung einer Lichtleitfaservorform im Wesentlichen ohne Hydroxygruppe (OH) in einer Kernschicht unter Einsatz von MCVD (Modified Chemical Vapor Deposition), wobei das Verfahren folgende Schritte umfasst:
(1) Bilden einer Mantelschicht (30) mit einem relativ niedrigen Brechungsindex durch Ablagern von Ruß (30a), der SiO₂ und GeO₂ enthält, auf einer Innenfläche eines Quarzrohrs (10); und
(2) Bilden einer Kernschicht mit einem relativ hohen Brechungsindex auf der Mantelschicht (30),
wobei der Schritt zum Bilden der Kernschicht umfasst:
(a) einen Schritt zum Bilden einer Basiskernschicht, der einen Ansammlungsprozess zur Erzeugung von Ruß (41 a) durch Erhitzen des Quarzrohrs (10) umfasst, so dass eine Temperatur von 1000°C bis 1400°C in dem Quarzrohr (10) entsteht, während ein Reaktionsgas zur Bildung von Ruß (41 a) zusammen mit einem Trägergas zugeführt wird, und anschließendes Ansammeln des Rußes (41 a) auf der Mantelschicht (30), einen Dehydrationsprozess zum Entfernen der Hydroxygruppe (OH) und der Feuchtigkeit, die in dem Ruß (41 a) und dem Rohr enthalten sind, durch Erhitzen des Quarzrohrs (10), so dass eine Temperatur von 600°C bis 1200°C in dem Quarzrohr (10) entsteht, während ein Dehydrationsgas in das Quarzrohr (10) geleitet wird, und einen Sinterprozess zum Sintern und Verglasen des Rußes (41 a) durch Erhitzen des Quarzrohrs (10) hat, auf dem der Ruß abgelagert ist, so dass eine Temperatur von mehr als 1700°C in dem Quarzrohr (10) entsteht; und
(b) einen Schritt zum Bilden einer zusätzlichen Kernschicht, um mindestens eine Kernschicht (42) zusätzlich auf der Basiskernschicht (41) durch mindestens einmaliges Wiederholen der Ansammlungs-, Dehydrations- und Sinterprozesse des Schrittes (a) zu bilden.

2. Verfahren zur Herstellung einer Lichtleitfaservorform nach Anspruch 1, wobei das Reaktionsgas SiCl₄ und GeCl₄ umfasst.

3. Verfahren zur Herstellung einer Lichtleitfaservorform nach Anspruch 1, wobei die Ansammlungs-, Dehydrations- und Sinterprozesse schrittweise durchgeführt werden, während das Quarzrohr (10) einer sich bewegenden Wärmequelle (20) ausgesetzt ist.

4. Verfahren zur Herstellung einer Lichtleitfaservorform nach Anspruch 3, wobei die Wärmequelle (20) aus der Gruppe ausgewählt wird, die aus einem Sauerstoff-Wasserstoff-Brenner, einem Plasmabrenner und einem Elektrowiderstandsofen besteht.

5. Verfahren zur Herstellung einer Lichtleitfaservorform nach Anspruch 4, wobei die Wärmequelle (20) sich mit einer Geschwindigkeit von weniger als 500 mm/min bewegt.

6. Verfahren zur Herstellung einer Lichtleitfaservorform nach Anspruch 1, wobei das Dehydrationsgas in das Quarzrohr (10) während des Sinterprozesses geleitet wird, um Restfeuchtigkeit und die übrige Hydroxygruppe (OH) zusätzlich zu entfernen.

7. Verfahren zur Herstellung einer Lichtleitfaservorform nach Anspruch 1, wobei das Dehydrationsgas mindestens einen der Stoffe umfasst, der aus der Gruppe ausgewählt wird, die aus Helium (He), Chlor (Cl₂) und Sauerstoff (O₂) besteht.

8. Verfahren zur Herstellung einer Lichtleitfaservorform nach Anspruch 1, wobei das Trägergas Sauerstoff ist.

9. Verfahren zur Herstellung einer Lichtleitfaservorform nach Anspruch 1, wobei sich das Quarzrohr (10) mit einer Drehzahl von 20 bis 100 U/min dreht, während der Ruß (30a, 41a) angesammelt wird.

10. Verfahren zur Herstellung einer Lichtleitfaservorform nach Anspruch 1, wobei mehr als eine Mantelschicht (30) auf der Innenfläche des Quarzrohrs (10) gebildet wird.

11. Verfahren zur Herstellung einer Lichtleitmonomodenfaser, umfassend die Schritte:
Bilden eines Vorformstabes durch Kondensieren der Lichtleitfaservorform, die nach dem Prozess, der in Anspruch 1 definiert ist, gefertigt ist, und dann Ziehen des Vorformstabes, um eine Lichtleitfaser herzustellen.

## Revendications

1. Un procédé de fabrication d'une préforme de fibre optique substantiellement exempte de groupes hydroxy (OH) dans une couche noyau au moyen d'un dépôt chimique en phase vapeur modifié le procédé comprenant les étapes de:
(1) former une couche de revêtement (30) avec un indice de réfraction relativement bas par la déposition de la suie (30a) contenant du SiO₂ et du GeO₂ sur une surface intérieure d'un tube de quartz (10); et
(2) former une couche noyau avec un indice de réfraction relativement élevé sur la couche de revêtement (30), où l'étape de formation de couche noyau comprend:
a) une étape de formation de couche noyau de base ayant un procédé d'accumulation pour générer la suie (41a) par le réchauffage du tube de quartz (10) de sorte qu'une température dans le tube de quartz (10) devienne 1000 °C∼1400 °C pendant qu'en introduisant un gaz de réaction pour former la suie (41a) de pair avec un gaz transporteur, et puis en accumulant la suie (41a) sur la couche de revêtement (30), un procédé de déshydratation pour éloigner le groupe hydroxy (OH) et l'humidité contenue dans la suie (41a) et dans le tube par le réchauffage du tube de quartz (10) de sorte q'une température dans le tube de quartz (10) devienne 600°C∼1200°C pendant qu'en introduisant un gaz de déshydratation dans le tube de quartz (10), et un procédé de sintérisation pour sintériser et vitrifier la suie (41a) en réchauffant le tube de quartz (10) auquel la suie est déposée de sorte qu'une température dans le tube de quartz (10) devienne au-dessus de 1700 °C; et
b) une étape de formation de couche noyau supplémentaire pour former de manière supplémentaire au moins une couche noyau (42) sur la couche noyau de base (41) par la répétition des procédés d'accumulation, de déshydratation et de sintérisation de l'étape (a) au moins une fois.

2. Un procédé de fabrication d'une préforme de fibre optique selon la revendication 1, où le gaz de réaction comprend du SiCl₄ et du GeCl₄.

3. Un procédé de fabrication d'une préforme de fibre optique selon la revendication 1, où les procédés d'accumulation, de déshydratation et de sintérisation sont réalisés successivement pendant que le tube de quartz (10) est exposé à une source de réchauffage mobile (20).

4. Un procédé de fabrication d'une préforme de fibre optique selon la revendication 3, où la source de réchauffage (20) est sélectée du groupe formé d'un brûleur oxygène-hydrogène, d'une torche à plasma et d'un four à résistance électrique.

5. Un procédé de fabrication d'une préforme de fibre optique selon la revendication 4, où la vitesse de la source de réchauffage (20) est moins que 500 mm/min.

6. Un procédé de fabrication d'une préforme de fibre optique selon la revendication 1, où le gaz de déshydratation est introduit dans le tube de quartz (10) pendant le procédé de sintérisation pour éloigner de manière supplémentaire l'humidité résiduelle et le groupe hydroxy (OH).

7. Un procédé de fabrication d'une préforme de fibre optique selon la revendication 1, où le gaz de déshydratation comprend au moins l'un sélecté du groupe formé de hélium (He), chlore (Cl₂), et oxygène (O₂).

8. Un procédé de fabrication d'une préforme de fibre optique selon la revendication 1, où le gaz transporteur est l'oxygène.

9. Un procédé de fabrication d'une préforme de fibre optique selon la revendication 1, où le tube de quartz (10) tourne à une vitesse de rotation de 20 - 100 rpm pendant que la suie (30a, 41a) est accumulée.

10. Un procédé de fabrication d'une préforme de fibre optique selon la revendication 1, où là est formée plus qu'une couche de revêtement (30) sur la surface intérieure du tube de quartz (10).

11. Un procédé pour former une fibre optique monomode comprenant les étapes de: former une tige préforme par condensation de la préforme de fibre optique fabriquée selon le procédé défini dans la revendication 1, et puis étirer la tige de préforme pour faire une fibre optique.
